# EUROPÄISCHE PATENTSCHRIFT

(11) **EP 2 714 476 B1**
(45) Veröffentlichungstag und Bekanntmachung des Hinweises auf die Patenterteilung: **23.03.2016**
(21) Anmeldenummer: 12713083.9
(22) Anmeldetag: 29.03.2012
(51) Int. Cl.: B60S 1/38

(54) **WISCHBLATT**
WIPER BLADE
BALAI D'ESSUIE-GLACE

(30) Priorität: 24.05.2011 DE 102011076362
(43) Veröffentlichungstag der Anmeldung: 09.04.2014
(73) Patentinhaber: Robert Bosch GmbH, 70442 Stuttgart (DE)
(72) Erfinder: DE BLOCK, Peter, B-3545 Halen (BE); AZNAG, Mohamed, B-3271 Scherpenheuvel-Zichem (BE)
(86) Internationale Anmeldenummer: PCT/EP2012/055585
(87) Internationale Veröffentlichungsnummer: WO 2012/159802

(56) Entgegenhaltungen:
- WO-A1-2008/020003
- DE-A1- 19 951 363
- DE-A1-102010 042 095

## Beschreibung

### Stand der Technik

Die Erfindung geht von einem Wischblatt nach dem Oberbegriff des Anspruchs 1 aus.

Aus der WO 2008/020003A1 ist ein Wischblatt mit einem Tragelement bekannt, das zwei mittels einer Brücke verbundene Federschienen aufweist, und mit einer Wischleiste, die von den Federschienen auswechselbar aufgenommen ist. Die Wischleiste ist an einem Ende mit einer Verdickung fest verbunden, mittels der sie relativ zum Tragelement fixierbar ist, indem die Verdickung an der Brücke oder an einer Stirnseite der Federschiene anlegbar ist. In dieser Position wird die Wischleiste relativ zum Tragelement durch eine Endkappe fixiert, die die Verdickung und die Brücke übergreift und durch lösbare Rastmittel in der Position verrastet. Im Falle der Demontage der Wischleiste werden die Rastmittel gelöst, sodass nach Entfernen der Endkappe die Wischleiste aus dem Tragelement gezogen werden kann.

Gemäß einer Ausgestaltung besitzt die Endkappe eine Seitenklappe, die über ein Filmgelenk mit der Endkappe verbunden ist. Die Schwenkachse des Filmgelenks verläuft in Längsrichtung der Wischleiste, wobei die Klappe auf der Anströmseite des Wischblatts geöffnet werden kann und dabei eine Öffnung freigibt. Im geöffneten Zustand der Seitenklappe kann die Endkappe über das Ende der Wischleiste geschoben werden. Dabei übergreift sie die Verdickung und die Brücke. In dieser Position wird die Klappe geschlossen, wobei eine Rastkante am unteren Teil der Klappe mit der Endkappe verrastet. Im geschlossenen Zustand der Seitenklappe liegt eine Stirnseite, die dem Ende der Wischleiste zugewandt ist, mit einer Rippe an der zugewandten Stirnseite der Brücke an, sodass die Brücke und die Verdickung der Wischleiste zwischen der Rippe und dem Ende der Endkappe eingeschlossen und somit in Längsrichtung zueinander fixiert sind.

Bei einer weiteren Ausführung besitzt die Endkappe anstelle der Seitenklappe an ihrer zum Ende der Wischleiste weisenden Stirnwand einen Schieber, der quer zur Längsrichtung der Wischleiste in einer Führung verschiebbar ist. Ein Rastelement sichert den Schieber in geschlossener Position, während der Schieber in geöffneter Stellung eine Öffnung freigibt, durch die die Wischleiste montiert und demontiert werden kann. Die Wischleiste ist relativ zum Tragelement mit seinen Federschienen fixiert, indem sich die Wischleiste mit ihren Verdickungen an dem geschlossenen Schieber abstützt und die Endkappe sich über Rastelemente an der vom Schieber abgewandten Stirnseite der Brücke abstützt.

Aus der DE 20 2004 012 09 U1 ist ein Wischblatt mit einer Wischleiste und zwei seitlich in Längsnuten eingebetteten Federschienen bekannt, die an ihren Enden durch Endkappen zueinander fixiert sind. Hierzu besitzen die Endkappen an den Innenseiten ihrer Führungen, mit denen sie auf den Federschienen geführt sind, Rastnocken, die in entsprechende Rastvertiefungen der Federschienen bei der Montage einrasten. Dadurch wird der Abstand zwischen den Federschienen während des Betriebs gewährleistet, ohne dass eine übliche Brücke erforderlich ist. Außerdem sind die Federschienen durch die Endkappe in Längsrichtung zueinander fixiert. Allerdings fehlt eine Fixierung der Wischleiste relativ zu den Federschienen bzw. der Endkappe. Zur Montage und Demontage der Wischleiste muss die Endkappe von den Federschienen entfernt werden. Da dadurch die Führung der Federschienen zueinander entfällt, wird die Montage der Wischleiste erschwert.

Dokument DE 10 2010 042095 A1 offenbart ein Wischblatt nach dem Oberbegriff des Anspruchs 1.

### Offenbarung der Erfindung

Nach der Erfindung halten die Endkappen die Federschienen auf einen vorgegebenen Abstand zueinander. Ferner ist die Sperreinrichtung ein Sperrnocken, der im geschlossenen Zustand der Seitenkappe in eine entsprechende Aussparung der Kopfleiste der Wischleiste eingreift. Bei dem erfindungsgemäßen Wischblatt fixiert die Endkappe sowohl die Federschienen zueinander, sodass sich eine Brücke zum Verbinden der Federschienen erübrigt, als auch die Wischleiste relativ zur Endkappe und damit zu den Federschienen. Die Endkappen werden bei der Montage und Demontage der Wischleiste nicht von den Federschienen entfernt, wodurch sich die Montage der Wischleiste erleichtert. Dabei kann die Endkappe durch eine Klippverbindung mit den Federschienen verbunden sein oder durch eine feste Verbindung wie durch Schweißen, Kleben, Warmverformen oder Verstemmen. Die feste Verbindung der Endkappe mit den Federschienen ergibt eine zuverlässige spielfreie Verbindung zwischen der Endkappe und den Federschienen. Ferner wird durch den Sperrnocken und die entsprechende Aussparung in der Kopfleiste der Wischleiste eine einfache Fixierung der Wischleiste ermöglicht, die anders als durch die Verdickung nach dem Stand der Technik in einem gängigen Extrudierverfahren hergestellt werden kann, wobei die Aussparung zweckmäßigerweise nach dem Extrudieren mittels Ausstanzen, Ausschneiden oder Wasserschneiden hergestellt werden kann. Um Verwechslungen bei der Montage zu vermeiden, ist es zweckmäßig, dass die Wischleiste an ihren beiden Enden gleiche Aussparungen aufweist, während die Seitenklappe mit dem Sperrnocken nur an einem Ende des Wischblatts vorgesehen werden muss. Nach dem Öffnen der Seitenklappe, wodurch der Sperrnocken außer Eingriff gebracht wird, kann die Wischleiste in beide Längsrichtungen aus dem Wischblatt entfernt werden. Grundsätzlich ist es jedoch nur erforderlich, dass eine Endkappe eine entsprechende Montageöffnung aufweist. Die Montageöffnung kann also zusammen mit der Seitenklappe an einer Endkappe vorgesehen werden oder allein ohne Seitenklappe an der Endkappe am anderen Ende des Wischblatts. Aus Designgründen ist es vorteilhaft, wenn die Montageöffnung durch eine entsprechende stirnseitige Klappe verschließbar ist. Hierdurch werden während des Betriebs Windgeräusche verringert und die Ansammlungen von Schmutz vermieden.
Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
Fig. 1 eine perspektivische Teilansicht eines Endes eines erfindungsgemäßen Wischblatts mit geöffneter Seitenklappe,
Fig. 2 eine Ansicht eines Wischblattendes nach Fig. 1 von unten,
Fig. 3 eine perspektivische Ansicht eines Wischblattendes nach Fig. 1 schräg von unten,
Fig. 4 eine perspektivische Teilansicht eines ersten Endes eines erfindungsgemäßen Wischblatts mit montierter Endkappe,
Fig. 5 perspektivische Seitenansicht einer Endkappe ohne Seitenklappe mit einer Montageöffnung in einer Stirnwand,
Fig. 6 Endkappe nach Fig. 5 ohne Montageöffnung,

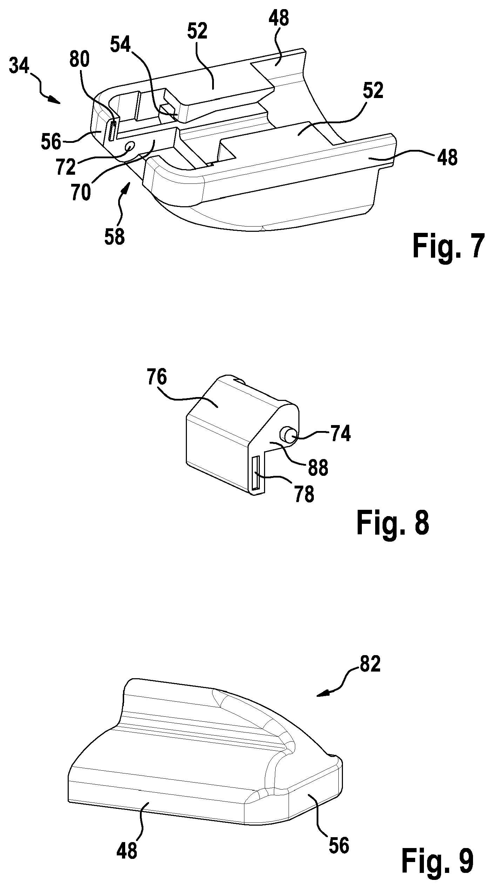

Fig. 7 perspektivische Ansicht einer Endkappe nach Fig. 5 von unten,
Fig. 8 perspektivische Ansicht einer stirnseitigen Klappe,
Fig. 9 perspektivische Ansicht einer üblichen Endkappe für ein anderes Ende eines erfindungsgemäßen Wischblatts,

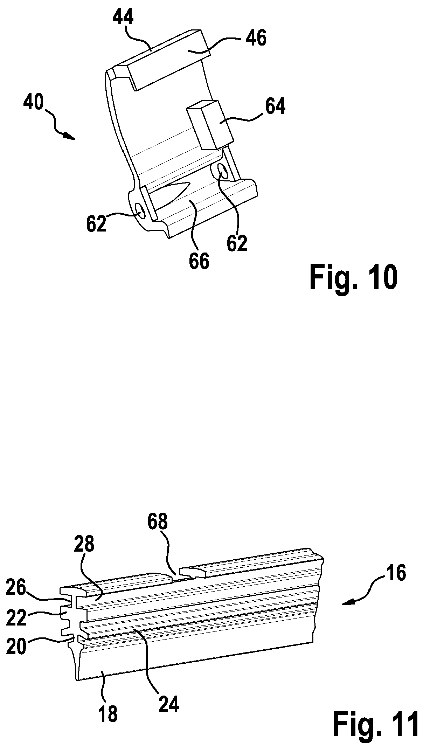

Fig. 10 perspektivische Ansicht einer Seitenklappe einer Endkappe von unten,
Fig. 11 perspektivische Ansicht eines Endes einer Wischleiste,
Fig. 12 bis 14 perspektivische Seitenansichten eines Endes in unterschiedlichen Montagesituationen.

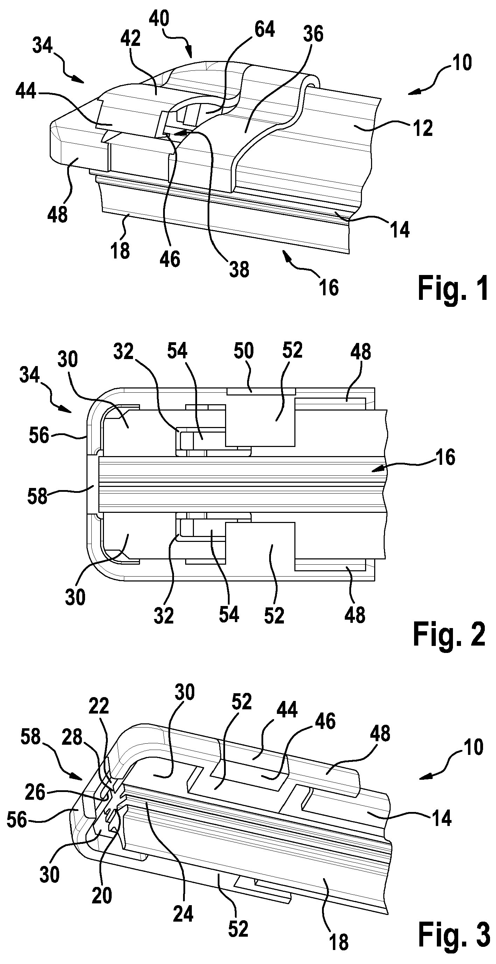

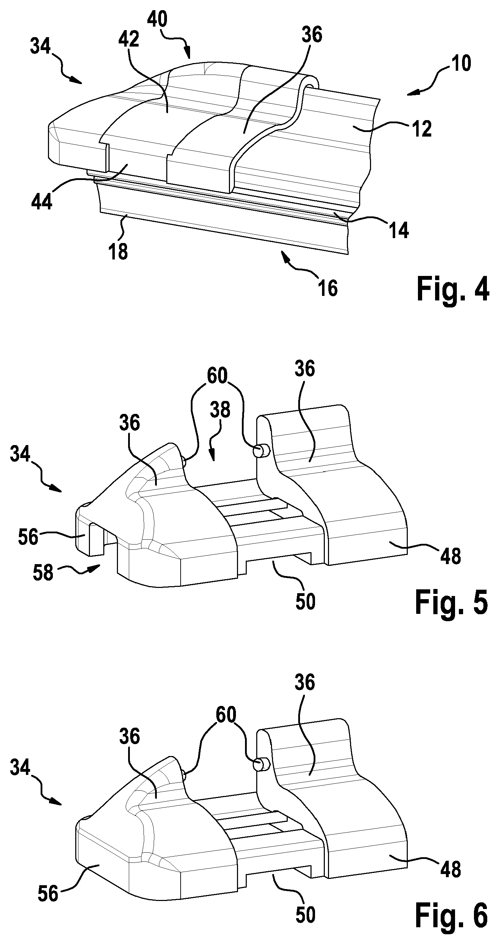

Die Figuren 1-4 zeigen ein Ende eines Wischblatts 10, das eine Wischleiste 16 besitzt, die durch ein Tragelement in Form zweier parallel zueinander angeordneter Federschienen 30 gehalten wird. Die Wischleiste 16 hat eine Wischlippe 18, die über einen Kippsteg 20 mit einer Kopfleiste 22 verbunden ist. Zwischen der Wischlippe 18 und der Kopfleiste 22 sind seitliche Stützleisten 24 angeordnet. Die Kopfleiste 22 weist zwei zu ihren Längsseiten hin offene Längsnuten 26 auf, in denen die Federschienen 30 eingebettet sind. Diese stehen seitlich ein Stück weit aus den Längsnuten 26 vor, wobei auf dem vorstehenden Teil der Federschienen 30 ein Spoiler 12 mittels Führungsprofilen 14 geführt ist. Der zum Ende des Wischblatts 10 weisende Teil des Spoilers 12 wird ein Stück weit von einer Endkappe 34 überlappt, die ein zum Spoiler 12 passendes Strömungsprofil 36 aufweist und die mittels Seitenführungen 48 seitlich an den Federschienen 30 geführt ist. An die Seitenführungen 48 schließen sich nach innen weisende Stützwände 52 an. Diese untergreifen die Federschienen 30.

Bei der Montage wird die Endkappe 34 stirnseitig auf die Federschienen 30 geschoben, wobei Rastnocken 54 der Endkappe 34 in entsprechende Aussparungen 32 der Federschienen 30 einrasten. Durch die Klippverbindung zwischen den Federschienen 30 und der Endkappe 34 werden die Federschienen auf einen vorgegebenen Abstand zueinander gehalten. Ferner werden sie in Längsrichtung durch die Endkappe 34 zueinander fixiert. Anstelle der Klippverbindung können die Federschienen 30 mit der Endkappe 34 fest verbunden sein, z.B. durch Schweißen, Kleben, Warmverformen, Verstemmen oder dergleichen.

Zur Montage der Wischleiste 16 besitzt die Endkappe 34 in ihrer zum Ende des Wischblatts 10 weisenden Stirnwand 56 eine Montageöffnung 58 durch die die Wischleiste 16 zwischen die Federschiene 30 eingefädelt wird. Der Abstand der Federschienen 30 voneinander ist so gewählt, dass zwischen den Federschienen 30 und einem von ihnen eingeschlossenen Steg 28 zwischen den Längsnuten 26 der Kopfleiste 22 ein ausreichendes Spiel bleibt um bei einer Wischbewegung über eine gekrümmte Fahrzeugscheibe eine ausreichende Längsverschiebung der Wischleiste 16 zu gewährleisten.

Damit die Wischleiste 18 nicht im Laufe der Zeit aus der Endkappe 34 in Längsrichtung auswandert, ist sie relativ zur Endkappe 34 in Längsrichtung fixiert. Zu diesem Zweck besitzt die Endkappe 34 eine Seitenklappe 40, die im geschlossenen Zustand eine Öffnung 38 in ihrem Strömungsprofil 36 verschließt und mit ihrem Strömungsprofil 42 bündig an das Strömungsprofil 36 der Endkappe 34 anschließt. Das Strömungsprofil 36 liegt auf der Anströmseite und wird durch eine Rückwand 66 auf der Abströmseite komplettiert. Die Seitenklappe 40 besitzt an ihren Stirnseiten Lagerelemente 62, die mit Lagerelementen 60 der Endkappe 34 eine Schwenkachse bilden. Diese verläuft in Längsrichtung des Wischblatts 10. An das Strömungsprofil 42 der Seitenklappe 40 schließt sich zur Wischleiste 16 hin ein Rastprofil 44 an, das mit einer Rastkante 46 die Seitenführung 48 der Endkappe 34 untergreift. Im Bereich des Rastprofils 44 befindet sich in der Seitenführung 48 eine Aussparung 50, in die das Rastprofil 44 eintaucht, sodass es bündig mit der äußeren Kontur der Seitenführung 48 abschließt. Die Lagerelemente 60, 62 sind zueinander passende Lagerzapfen und Lagerbohrungen, die bei der Montage ineinander einrasten.

Die Seitenklappe 40 besitzt an ihrer Innenwand einen Sperrnocken 64, der mit einer Aussparung 68 in der Kopfleiste 22 der Wischleiste 16 zusammenwirkt und die Lage der Wischleiste 16 relativ zur Endkappe 34 sichert. In dem dargestellten Ausführungsbeispiel ist die Aussparung 68 eine Quernut, in die als Sperrnocken 64 ein quaderförmiger Block passt. Grundsätzlich können der Sperrnocken 64 und die Aussparung 68 eine beliebige Form haben, sofern sie den gewünschten Zweck erreichen.

Aus Designgründen ist es vorteilhaft, die Montageöffnung 58 durch eine stirnseitige Klappe 76 zu verschließen. Diese besitzt an ihren Seitenwangen 88 Lagerelemente 74 die mit Lagerelementen 72 an Längsstreben 70 im Bereich der Montageöffnung 58 zusammenwirken, sodass die Klappe 76 um eine Schwenkachse geschwenkt werden kann, die quer zur Längsrichtung des Wischblatts 10 und parallel zu einer Ebene verläuft, die durch die Federschienen 30 gebildet wird. Die Klappe 76 weist an ihren Seitenwangen ferner Rastvertiefungen 78 auf, in die Rastvorsprünge 80 in geschlossenem Zustand der Klappe 76 einrasten, die am Rahmen der Montageöffnung 58 angeordnet sind.

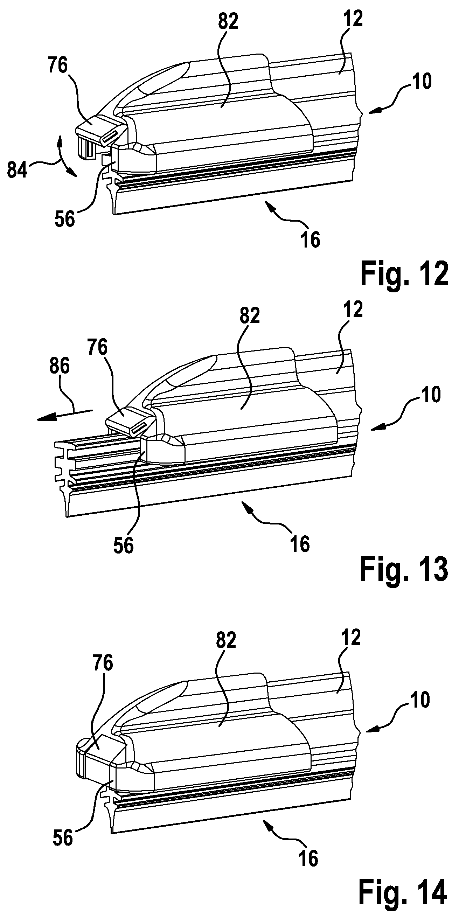

Um Verwechslungen bei der Montage zu vermeiden, ist es zweckmäßig, dass die Wischleiste 16 an ihren Enden gleiche Aussparungen 68 besitzt, die auf den Sperrnocken 64 der Seitenklappe 40 abgestimmt sind. Da die Wischleiste 16 zweckmäßigerweise nur an einem Ende relativ zu den Federschienen 30 fixiert wird, reicht es aus, dass nur eine der Endkappen 34 oder 82 eine Seitenklappe 40 mit einem Sperrnocken 64 besitzt. Die gleiche Endkappe 34 kann zudem die Montageöffnung 58 aufweisen, während die andere Endkappe 82 eine geschlossene Stirnwand 56 hat. Allerdings kann die Montageöffnung 58 an der Endkappe 82 ohne Seitenklappe 40 vorgesehen sein, da die Wischleiste 16 grundsätzlich in Längsrichtung zu beiden Enden des Wischblatts 10 demontiert werden kann, weil sie keine Vorsprünge oder Verdickungen aufweist. Zur Montage bzw. Demontage der Wischleiste 16 (Fig. 12 bis Fig. 14) wird die Seitenklappe 40 geöffnet, sodass der Sperrnocken 64 außer Eingriff ist. Ebenfalls wird die stirnseitige Klappe 76 in Öffnungsrichtung 84 geöffnet, sodass die Wischleiste 16 in Demontagerichtung 86 aus dem Wischblatt 10 entfernt werden kann oder in entgegengesetzter Richtung zwischen die Federschienen 30 in das Wischblatt 10 eingeschoben werden kann. Nach der Montage wird die Klappe 76 in Schließrichtung 84 geschlossen.

## Patentansprüche

1. Wischblatt (10) in Flachbalkenbauweise mit einer Wischleiste (16), die von einem Tragelement in Form zweier flacher Federschienen (30) gehalten wird, die in zwei Längsnuten (26) einer Kopfleiste (22) der Wischleiste (16) eingesetzt und zu einer Wischlippe (18) der Wischleiste (16) konkav vorgebogenen sind, wobei auf den Enden der Federschienen (30) Endkappen (34, 82) sitzen, von denen mindestens eine mittels einer an einer Seitenklappe (40) der Endkappe (34) angebrachten Sperreinrichtung (64) die Wischleiste (16) in Längsrichtung relativ zu den Federschienen (30) sichert, wobei die Sperreinrichtung ein Sperrnocken (64) ist, der im geschlossenen Zustand der Seitenklappe (40) in eine entsprechende Aussparung (68) der Kopfleiste (22) der Wischleiste (16) eingreift, **dadurch gekennzeichnet, dass** von den Endkappen (34, 82) mindestens eine in der zum Ende des Wischblatts (10) weisenden Stirnwand (56) eine Montageöffnung (58) zur Montage und Demontage der Wischleiste (16) besitzt und dass die Endkappen (34, 82) die Federschienen (30) auf einen vorgegebenen Abstand zueinander halten.

2. Wischblatt (10) nach Anspruch 1, **dadurch gekennzeichnet, dass** die Endkappen (34, 82) mittels einer festen Verbindung wie durch Schweißen, Kleben, Warmverformen oder Verstemmen an den Federschienen (30) befestigt sind.

3. Wischblatt (10) nach einem der vorhergehenden Ansprüche, **dadurch gekennzeichnet, dass** die Montageöffnung (58) durch eine stirnseitige Klappe (76) verschließbar ist, die mittels Lagerelementen (74), die mit passenden, im Bereich der Montageöffnung (58) an der Endkappe (34, 82) angeordneten Lagerelementen (72) um eine quer zur Längsrichtung des Wischblatts (10) und parallel zu einer durch die Federschienen (30) gebildeten Fläche verlaufende Achse schwenkbar gelagert ist, wobei sie in der Schließstellung durch Rastvertiefungen (78) in ihren Seitenwangen (88) mit Rastvorsprüngen (80) am Rahmen der Montageöffnung (58) verrasten.

4. Wischblatt (10) nach einem der vorhergehenden Ansprüche, **dadurch gekennzeichnet, dass** die Endkappe (34) für ein erstes Ende des Wischblatts (10) sowohl eine Seitenklappe (40) mit einem Sperrnocken (64) als auch eine offene oder verschließbare Montageöffnung (58) besitzt, während die Endkappe (82) für ein zweites Ende des Wischblatts (10) eine geschlossene Stirnwand (56) und keine Seitenklappe (40) hat.

5. Wischblatt (10) nach einem der Ansprüche 1 bis 3, **dadurch gekennzeichnet, dass** die Endkappe (34) für ein erstes Ende des Wischblatts (10) eine Seitenklappe (40) mit einem Sperrnocken (64) besitzt, während die Endkappe (82) eine offene oder verschließbare Montageöffnung (58) hat.

6. Wischblatt (10) nach einem der vorhergehenden Ansprüche, **dadurch gekennzeichnet, dass** die Wischleiste (16) an ihren beiden Enden eine gleiche Aussparung (68) aufweist.

7. Wischblatt (10) nach einem der vorhergehenden Ansprüche, **dadurch gekennzeichnet, dass** die Aussparung (68) eine quer zur Längsrichtung der Wischleiste (16) verlaufende Nut ist.

8. Wischblatt (10) nach einem der vorhergehenden Ansprüche, **dadurch gekennzeichnet, dass** die Aussparung (68) mittels Ausstanzen, Ausschneiden oder Wasserschneiden hergestellt ist.

## Claims

1. Wiper blade (10) of flat bar construction with a wiper strip (16) which is held by a supporting element in the form of two flat spring rails. (30) which are inserted into two longitudinal grooves (26) in a head strip (22) of the wiper strip (16) and are pre-bent concavely to form a wiper lip (18) of the wiper strip (16), wherein end caps (34, 82) sit on the ends of the spring rails (30), at least one of which end caps secures the wiper strip (16) in the longitudinal direction relative to the spring rails (30) by means of a locking device (64) attached to a side flap (40) of the end cap (34), wherein the locking device is a locking cam (64) which, in the closed state of the side flap (40), engages in a corresponding recess (68) in the head strip (22) of the wiper strip (16), **characterized in that** at least one of the end caps (34, 82) has, in the end wall (56) facing the end of the wiper blade (10), an installation opening (58) for the installation and removal of the wiper strip (16), and **in that** the end caps (34, 82) hold the spring rails (30) at a predetermined distance from each other.

2. Wiper blade (10) according to Claim 1, **characterized in that** the end caps (34, 82) are fastened to the spring rails (30) by means of a fixed connection, such as by welding, adhesive bonding, hot deformation or caulking.

3. Wiper blade (10) according to either of the preceding claims, **characterized in that** the installation opening (58) is closable by an end-side flap (76) which is mounted pivotably about an axis running transversely with respect to the longitudinal direction of the wiper blade (10) and parallel to a surface formed by the spring rails (30) by means of bearing elements (74) which with mating bearing elements (72) arranged in the region of the installation opening (58) on the end cap (34, 82), wherein said end caps latch in the closed position by means of latching depressions (78) in the side cheeks (88) thereof with latching projections (80) on the frame of the installation opening (58).

4. Wiper blade (10) according to one of the preceding claims, **characterized in that** the end cap (34) for a first end of the wiper blade (10) has both a side flap (40) with a locking cam (64) and also an open or closable installation opening (58), whereas the end cap (82) for a second end of the wiper blade (10) has a closed end wall (56) and no side flap (40).

5. Wiper blade (10) according to one of Claims 1 to 3, **characterized in that** the end cap (34) for a first end of the wiper blade (10) has a side flap (40) with a locking cam (64), whereas the end cap (82) has an open or closable installation opening (58).

6. Wiper blade (10) according to one of the preceding claims, **characterized in that** the wiper strip (16) has an identical recess (68) at both of the ends thereof.

7. Wiper blade (10) according to one of the preceding claims, **characterized in that** the recess (68) is a groove running transversely with respect to the longitudinal direction of the wiper strip (16).

8. Wiper blade (10) according to one of the preceding claims, **characterized in that** the recess (68) is produced by means of punching out, cutting out or water cutting.

## Revendications

1. Balai d'essuie-glace (10) de construction à barre plate, comprenant une raclette de balai d'essuie-glace (16) qui est retenue par un élément de support sous la forme de deux rails élastiques plats (30) qui sont insérés dans deux rainures longitudinales (26) d'une raclette de tête (22) de la raclette de balai d'essuie-glace (16) et qui sont précintrés de manière concave pour former une lèvre de balai d'essuie-glace (18) de la raclette de balai d'essuie-glace (16), des embouts (34, 82) étant posés aux extrémités des rails élastiques (30), dont au moins un fixe, au moyen d'un dispositif de serrage (64) monté sur un volet latéral (40) de l'embout (34), la raclette de balai d'essuie-glace (16) dans la direction longitudinale par rapport au rail élastique (30), le dispositif de serrage étant une came de serrage (64) qui, dans l'état fermé du volet latéral (40), vient en prise dans un évidement correspondant (68) de la raclette de tête (22) de la raclette de balai d'essuie-glace (16), **caractérisé en ce qu'**au moins un parmi les embouts (34, 82) présente, dans la paroi frontale (56) tournée vers l'extrémité du balai d'essuie-glace (10), une ouverture de montage (58) pour le montage et le démontage de la raclette de balai d'essuie-glace (16) et **en ce que** les embouts (34, 82) retiennent les rails élastiques (30) à une distance prédéfinie les uns des autres.

2. Balai d'essuie-glace (10) selon la revendication 1, **caractérisé en ce que** les embouts (34, 82) sont fixés aux rails élastiques (30) au moyen d'une connexion fixe, par exemple par soudage, collage, déformation à chaud ou matage.

3. Balai d'essuie-glace (10) selon l'une quelconque des revendications précédentes, **caractérisé en ce que** l'ouverture de montage (58) peut être fermée par un volet frontal (76) qui est supporté de manière à pouvoir pivoter autour d'un axe s'étendant transversalement par rapport à la direction longitudinale du balai d'essuie-glace (10) et parallèlement à une surface formée par les rails élastiques (30), au moyen d'éléments de palier (74) qui avec des éléments de palier (72) adaptés, disposés dans la région de l'ouverture de montage (58) au niveau de l'embout (34, 82), ceux-ci s'encliquetant, dans la position de fermeture, par des renfoncements d'encliquetage (78) dans leurs joues latérales (88) avec des saillies d'encliquetage (80) au niveau du cadre de l'ouverture de montage (58).

4. Balai d'essuie-glace (10) selon l'une quelconque des revendications précédentes, **caractérisé en ce que** l'embout (34) possède, pour une première extrémité du balai d'essuie-glace (10), à la fois un volet latéral (40) avec une came de verrouillage (64) et une ouverture de montage (58) ouverte ou pouvant être fermée, tandis que l'embout (82) possède, pour une deuxième extrémité du balai d'essuie-glace (10), une paroi frontale fermée (56) et aucun volet latéral (40).

5. Balai d'essuie-glace (10) selon l'une quelconque des revendications 1 à 3, **caractérisé en ce que** l'embout (34) possède, pour une première extrémité du balai d'essuie-glace (10), un volet latéral (40) avec une came de verrouillage (64), tandis que l'embout (82) possède une ouverture de montage ouverte ou pouvant être fermée (58).

6. Balai d'essuie-glace (10) selon l'une quelconque des revendications précédentes, **caractérisé en ce que** la raclette de balai d'essuie-glace (16) présente au niveau de ses deux extrémités un évidement identique (68).

7. Balai d'essuie-glace (10) selon l'une quelconque des revendications précédentes, **caractérisé en ce que** l'évidement (68) est une rainure s'étendant transversalement à la direction longitudinale de la raclette de balai d'essuie-glace (16).

8. Balai d'essuie-glace (10) selon l'une quelconque des revendications précédentes, **caractérisé en ce que** l'évidement (68) est réalisé au moyen d'un estampage, d'un découpage ou d'une découpe au jet d'eau.
